# EUROPEAN PATENT SPECIFICATION

(11) **EP 0 344 799 B1**
(45) Date of publication and mention of the grant of the patent: **13.10.1993**
(21) Application number: 89110030.7
(22) Date of filing: 02.06.1989
(51) Int. Cl.: B01D 67/00, B01D 69/12, B05D 1/18, B05D 1/20

(54) **Selectively permeable film and process for producing the same**
Selektiv-Permeabler Film und Verfahren zu seiner Herstellung
Pellicule selective perméable et procédé de sa fabrication

(30) Priority: 03.06.1988 JP 137820/88; 09.03.1989 JP 57005/89
(43) Date of publication of application: 06.12.1989
(73) Proprietor: MATSUSHITA ELECTRIC INDUSTRIAL CO., LTD., Kadoma-shi, Osaka-fu, 571 (JP)
(72) Inventor: Ogawa, Kazufumi, Hirakata-shi (JP)
(74) Representative: Graf von Wengersky, Anton

(56) References cited:
- GB-A- 2 135 319
- PATENT ABSTRACTS OF JAPAN, vol. 11, no. 89 (C411)[2536], March 19, 1987; & JP-A-61242608 (MATSUSHITA ELECTRIC IND. CO. LTD.) 28.10.1986
- PATENT ABSTRACTS OF JAPAN, vol. 8, no. 46 (C-212)[1483], February 29, 1984; & JP-A-58206611 (TOSHINOBU HIGASHIMURA) 01.12.1983

## Description

The present invention relates to a selectively permeable film to a gas or a liquid. More particularly, the present invention relates to a selectively permeable film consisting of a monolayer polymer or a multilayer polymer.

The selectively permeable film is classified into two large groups, that is, the selectively permeable film to a gas and that to a liquid. As for that to a gas, an oxygen-enriching membrane is used for the purpose of the improvement of the combustion properties of a gas or petrolium fuel. Also, as for that to a liquid, there is used a membrane for the separation of alcohol-water or a membrane for the separation of oil-water.

The conventional, selectively permeable film is, however, inferior in efficiency of selective permeability since it is mainly produced by coating a porous substrate with a polymer. Various methods have been investigated for improving the efficiency and, however, any film having good selective permeability has not yet been obtained.

Also, a thinner film is required for increasing the permeability of a selectively permeable film.

Poly(trimethylsilylacetylene) or the like has been known as a polymer having properties of good oxygen-enriching membrane. However, that is inferior in film-formability and therefore there is a drawback that a thin film thereof has many pinholes and hence the efficiency of selective permeability is low. Therefore, there has been required a thin film which has no pinhole, of a polymer having properties as an oxygen-enriching material such as poly(trimethylsilylacetylene) and the like in order to improve the permeability and the efficiency thereof of a selectively permeable film.

GB-2 135 319 A discloses a polymer and permselective membranes composed of said polymer. Said polymer contains a functional group for polymerisation. In some cases, according to the above reference, a membrane composed of said polymer is, already polimerized, casted on a supporting backing layer. In this case, adhesion of the polymer to the supporting backing layer is achieved by an adhesive.

JP-A-61 242 608 discloses a material for forming a membrane, said material comprising photosensitive groups.

The object of the invention is to provide a selectively permeable film and a process for producing the same, said film adhering to the supporting backing layer in a very dense way without any pinholes.

According to the invention the above object is solved by a selectively permeable film according to claim 1 and by a process for producing the same according to claim 9, respectively.

Other objects and advantages of the invention will become apparent from the following description and the attached drawings.

In the attached drawings, Figure 1(a) is a conceptional enlarged cross section of the substrate on which there is formed one layer of the adsorption film derived from HC≡C-(CH₂)₁₇-SiCl₃, Figure 1(b) is a conceptional enlarged cross section of the substrate on which a trans-polyacetylene structure is formed by polymerization, Figure 2(a) is a conceptional enlarged cross section of the substrate on which there is one layer of the adsorption film derived from Me₃SiC≡C-(CH₂)₁₇-SiCl₃, Figure 2(b) is a conceptional enlarged cross section of the substrate on which a trans-polyacetylene structure is formed by polymerization, Figure 3(a) is a conceptional enlarged cross section of the substrate on which there is one layer of the adsorption film derived from HC≡C-(CH₂)₁₇-SiCl₃, Figure 3(b) is a conceptional enlarged cross section of the substrate on which a cis-polyacetylene structure is formed by polymerization, Figure 4(a) is a conceptional enlarged cross section of the substrate on which there is formed one layer of the adsorption film derived from Me₃Si-C≡C-(CH₂)₁₇-SiCl₃, Figure 4(b) is a conceptional enlarged cross section of the substrate on which a cis-polyacetylene structure is formed by polymerization, Figure 5(a) is a conceptional enlarged cross section of the substrate on which there is built up one layer of the LB film of HC≡C-(CH₂)₂₀-COOH, Figure 5(b) is a conceptional enlarged cross section of the substrate on which a trans-polyacetylene structure is formed by polymerization, Figure 6(a) is a conceptional enlarged cross section of the substrate on which there is built up one layer of the LB film of Me₃Si-C≡C-(CH₂)₂₀-COOH, Figure 6(b) is a conceptional enlarged cross section of the substrate on which a trans-polyacetylene structure is formed by polymerization, Figure 7(a) is a conceptional enlarged cross section of the substrate on which there is built up one layer of the LB film of HC≡C-(CH₂)₂₀-COOH, Figure 7(b) is a conceptional enlarged cross section of the substrate on which a cis-polyacetylene structure is formed by polymerization, Figure 8(a) is a conceptional enlarged cross section of the substrate on which there is built up one layer of the LB film of Me₃Si-C≡C-(CH₂)₂₀-COOH, and Figure 8(b) is a conceptional enlarged cross section of the substrate on which a cis-polyacetylene structure is formed by polymerization.

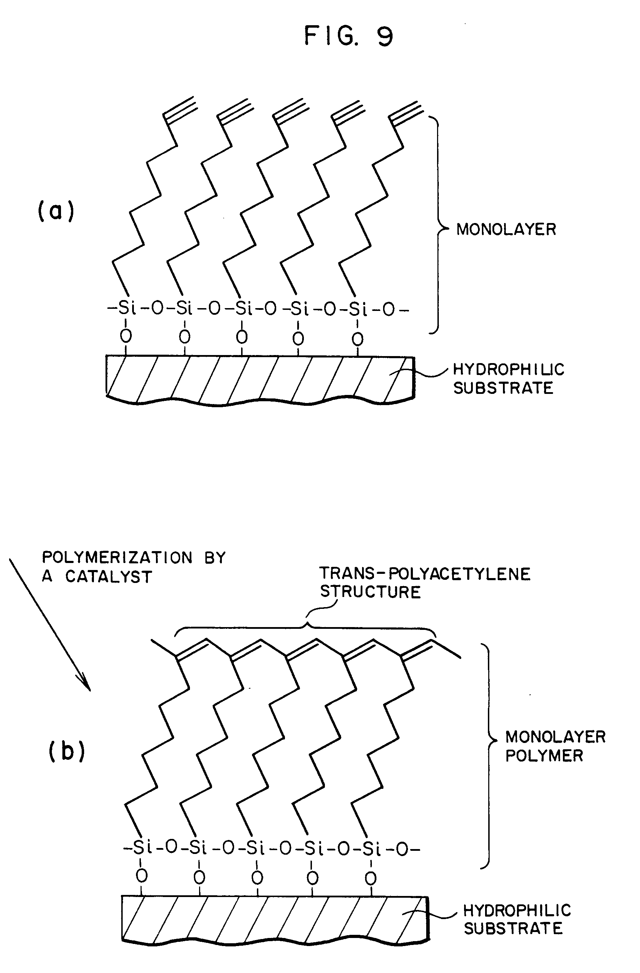

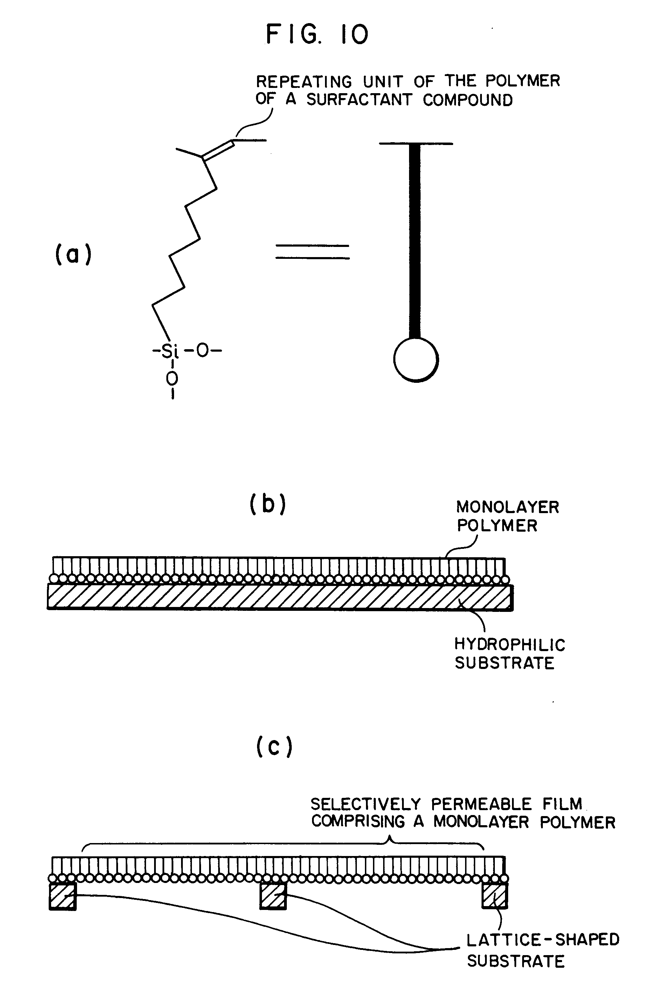

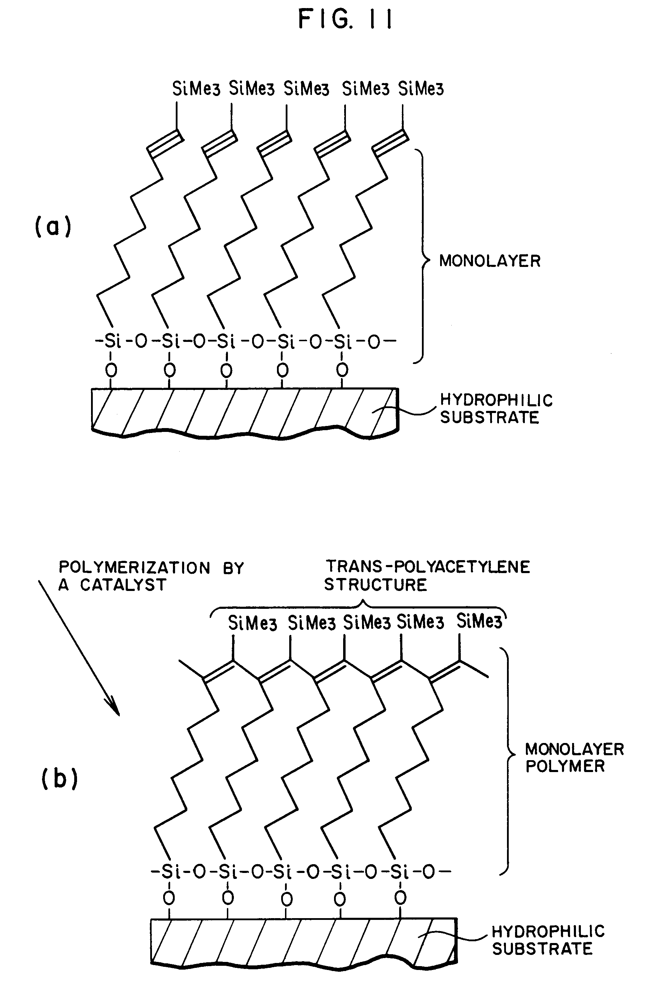

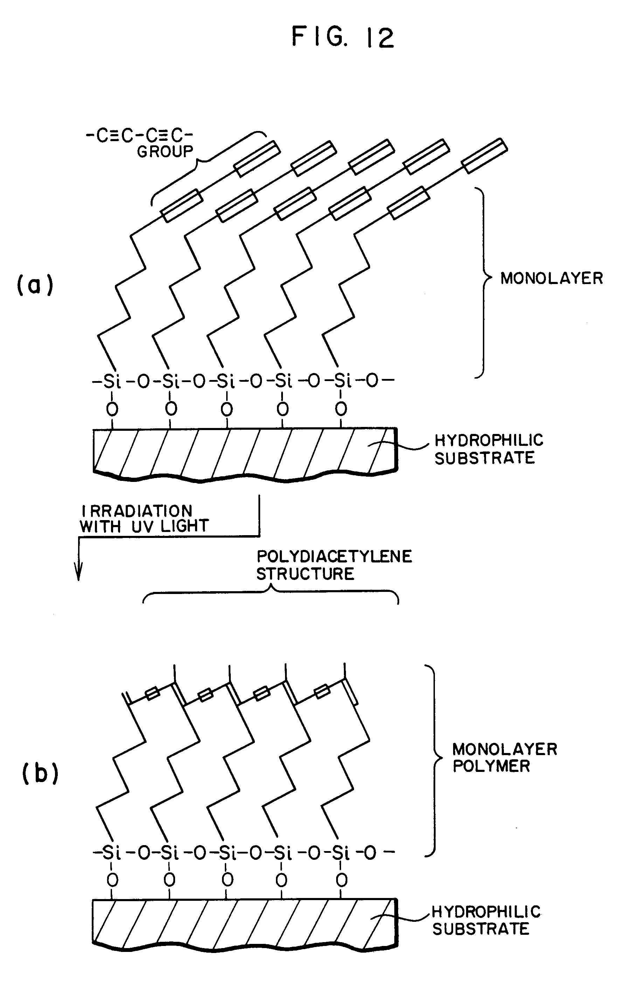

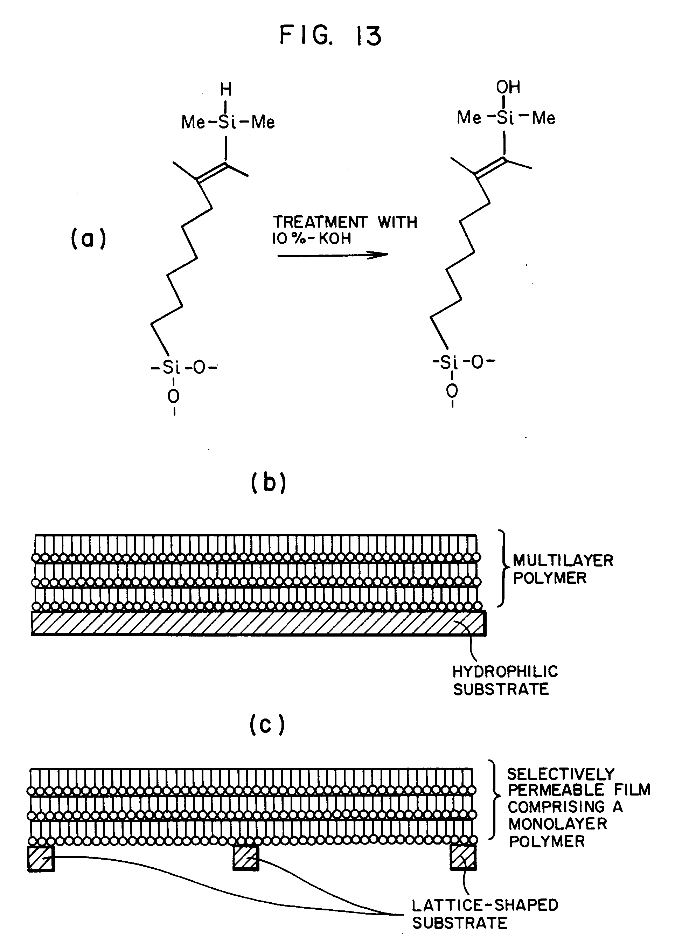

Further, Figure 9 is the scheme of a process for producing the monolayer of a polymer, wherein a trans-polyacetylene structure is formed in the monolayer derived from HC≡C-(CH₂)₁₇-SiCl₃, Figure 10(a) is a conceptional enlarged cross section of the repeating unit of the polymer of a surfactant compound, Figure 10(b) and (c) are conceptional enlarged cross sections of the selectively permeable films produced according to the present invention in each of which films there is formed a trans-polyacetylene structure, Fig. 11 is the scheme of a process for producing the monolayer of a polymer, wherein a trans-polyacetylene structure is formed in the monolyaer derived from Me₃Si-C≡C-(CH₂)₁₇-SiCl₃. Figure 12 is the scheme of a process for producing the monolayer of a polymer, wherein a diacetylene structure is formed in the monolayer derived from a diacetylene derivative and Figure 13 is the scheme of a process for producing a selectively permeable film from a multilayer derived from Me₂HSi-C≡C-(CH₂)₁₇-SiCl₃, wherein polyacetylene structures are formed and the surface of the film is modified.

The polymerizable group in the present specification is a group which can cause the polymerization of a molecule having said group. The polymerizable group specifically includes -C=C-, -C≡C-, -C≡C-C≡C- and the like.

The another functional group in the present specification specifically includes -COOH, 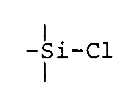
and the like.

The compound having a polymerizable group and another functional group includes HC≡C-(CH₂)n-SiCl₃ (n=14-24), (CH₃)₃Si-C≡C-(CH₂)n-SiCl₃ (n=14-24), HC≡C-C≡C-(CH₂)₁₉-SiCl₃, H₂C=CH-(CH₂)₁₇-SiCl₃, (CH₃)₂HSi-C≡C-(CH₂)n-SiCl₃ (n=14-24), HC≡C-(CH₂)n-COOH (n=14-23), (CH₃)₃Si-C≡C-(CH₂)n-COOH (n=14-23) and the like.

A straight hydrocarbon chain compound having the above-mentioned polymerizable group and functional group is hereinafter referred to as a surfactant compound.

It is generally known that a straight hydrocarbon chain compound having a chlorosilane group at an end of the compound can form a monolayer at the surface of a hydrophilic substrate by chemisorption in an organic solvent. Also, further monolayers can be formed on the surface of said monolayer formed on the substrate when said surface is modified so as to become hydrophilic by an irradiation with a high energy beam in a gas containing oxygen.

Therefore, when the surfactant compound used in the present invention forms a monolayer or multilayer at the surface of a hydrophilic porous substrate by chemisorption (hereinafter, the monolayer and multilayer formed by chemisorption may be also referred to as the chemisorption monolayer and chemisorption multilayer in some places) and then is polymerized, there can be obtained the monolayer of a polymer (hereinafter referred to as the monolayer polymer) having a thickness of several tens angstroms. Also, the multilayer of a polymer (hereinafter referred to as the multilayer polymer) can be obtained using the multilayer of said polymerizable compound.

The chemisorption in the present specification is an adsorption caused at the interface of the phase of a substrate and the phase of a surfactant compound by the action of chemical bond strength between the two phases.

Specifically, when a surfactant compound has 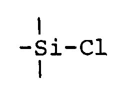
as the another functional group, the chemisorption is conducted according to a process comprising immersing a hydrophilic substrate, in a solution obtained by dissolving said surfactant compound in a mixture of 80% by weight of n-hexane, 12% by weight of carbontetrachloride and 8% by weight of chloroform in a concentration of 1.0 x 10⁻⁴ - 1.0 x 10⁻² mol/L, at a temperature in a range of room temperature to 80°C in an atmosphere of a dry inert gas for 5 minutes or more. Thereby, the bonding represented by the formula: 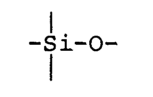
can be formed on the hydrophilic substrate.

The porous hydrophilic substrate used in the present invention is that whose surface is hydrophilic, and specifically includes a cellulose filter, a glass filter, a porous metal film and the like.

The polymerization of the surfactant compound is conducted at the part of the polymerizable group by immersing the obtained chemisorption monolayer or multilayer in the organic solution of a catalyst or by irradiating the obtained chemisorption monolayer or multilayer with an energy beam.

The catalyst used in the present invention includes a metal halide catalyst containing one selected from the group consisting of Mo, W, Nb, Ta and the like, such as MoCl₅, MoCl₆, WCl₆,NbCl₅, TaCl₅ and the like; a metal carbonyl catalyst containing one selected from the group consisting of Mo, W, Nb, Ta and the like, such as Mo(CO)₅, Mo(CO)₆, W(CO)₆, Nb(CO)₅, Ta(CO)₅ and the like: a combination of a metal halide catalyst containing one selected from the group consisting of Mo, W, Nb, Ta and the like and an organotin compound such as (C₄H₉)₄Sn and the like; a combination of a metal halide catalyst containing one selected from the group consisting of Mo, W, Nb, Ta and the like and an organobismuth compound such as (C₆H₅)₃Bi and the like. Preferably, the catalyst is MoCl₅, WCl₆, NbCl₅, TaCl₅, Mo(CO)₅, W(CO)₆, Nb(CO)₅, Ta(CO)₅, a combination of WCl₆ and (C₄H₉)₄Sn or a combination of MoCl₅ and (C₆H₅)₃Bi.

The organic solvent used in the polymerization includes toluene, dioxane, anisole and the like. When using Mo(CO)₆ or W(CO)₆ as the catalyst, carbontetrachloride is used as the organic solvent.

In this case, a carbotetrachloride solution thereof must be irradiated with the ultra-violet ray during the polymerization.

The energy beam includes ultra-violet light, X-ray, electron beam, γ-ray and the like.

The resulting monolayer polymer or multilayer polymer is an ultra thin film of a polymer which is stable even in an atmosphere containing oxygen.

Also in the present invention, when a surfactant compound has -COOH as the another functional group, the monolayer or multilayer of the surfactant compound can be obtained by a process comprising spreading, at the surface of the water, the solution obtained by dissolving the surfactant compound in an organic solvent and then vaporizing the organic solvent and thereafter gathering up, horizontally at the surface of the water, the molecules of the surfactant compound left at the surface of the water using a barrier, and building up a monolayer or multilayer of the surfactant compound on a porous hydrophilic substrate by dipping and drawing up the substrate under a constant surface pressure. Hereinafter, this process is referred to as the LB process (LB is the abbreviation of Langmuir-Blodgett) and the monolayer or multilayer made by the LB process is referred to as the LB film, collectively.

The polymerization of the surfactant compound in the LB film is conducted in the same manner as stated in the case of the chemisorption monolayer or multilayer. Hereinafter, the chemisorption monolayer and multilayer may be also referred to as the chemisorption film collectively in some places.

The resulting monolayer polymer or multilayer polymer is an ultra thin film of a polymer which is stable even in an atmosphere containing oxygen.

The polymerization in each of the LB film and the chemisorption film is conducted in the state that the molecules of the surfactant compound are regularly oriented on the substrate. Thereby, there can be produced a selectively permeable film excellent in efficiency of selective permeability.

Also, the permeability can be controlled by changing a number of layers in the chemisorption film or LB film.

The present inventor has further found that when building up the LB film, the application of a d.c. voltage horizontally at the surface of the water results in a selectively permeable film better in orientation of the molecules of the surfactant compound on the substrate.

For example, when a porous hydrophilic substrate whose surface is hydrophilic is immersed in the aprotic organic solution of a surfactant compound having -C≡C- as a polymerizable group and 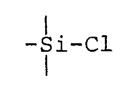
as another functional group, there can be obtained the chemisorption monolayer of the surfactant compound, in which monolayer the molecules of the surfactant compound are regularly oriented at the surfaces of the substrate. Also for example, there can be obtained the LB monolayer of a surfactant compound having -C≡C- as a polymerizable group and -COOH as another functional group according to the LB process, in which monolayer the molecules of the surfactant compound are regularly oriented at the surface of the substrate. When the surfactant compound is polymerized in the chemisorption film or LB film by immersing the film in the organic solution of the catalyst or by irradiating the film with an energy beam, a polyacetylene derivative having a very high molecular weight can be obtained since the polymerization is conducted in the state that the polymerizable groups (-C≡C-groups) of the molecules of the surfactant compound are regularly oriented on the substrate. Thereby, there is obtained a selectively permeable film comprising a very thin monolayer polymer. The permeability thereof can be controlled by changing a number of layers. Incidentally, the monolayer of polyethylene can be obtained when a large excess of energy beam is applied to the chemisorption film or LB film.

Also in the present invention, after the surfactant compound is polymerized by immersing the obtained chemisorption film or LB film formed on a hydrophilic substrate in the organic solution of the catalyst or by irradiating the obtained chemisorption film or LB film with an energy beam, a part of the substrate can be removed by etching the substrate from the back side on which any film is not formed.

The resulting monolayer polymer or multilayer polymer is an ultra thin film of a polymer which is stable even in an atmosphere containing oxygen.

The hydrophilic substrate includes a silicon wafer, a glass plate, a metal plate, a ceramic plate, the above-mentioned porous hydrophilic substrate and the like.

Before the etching of the substrate, the surface of the chemisorption film or LB film formed on the substrate may be modified by subjecting the film to a chemical treatment or physical treatment. That is to say, a part of the group existing at the surface of the chemisorption or LB film can be replaced by an alcoholic hydroxide group or an ionic functional group by subjecting the film to a physical or chemical treatment. Thereby, an objective selective permeability can be imparted to the chemisorption film or LB film.

The physical treatment is, for example, to treat the surface of the film with the plasma of oxygen (100 W, 5 minutes). Thereby, an alcoholic hydroxide is substituted for a part of the group existing at the surface of the film.

The chemical treatment is, for example, to convert H of the terminal silane group of the monolayer polymer or multilayer polymer of a surfactant compound having a silane group into a hydroxide group and thereafter immerse the polymer in the hexane solution of butyllithium and further react the resulting polymer with 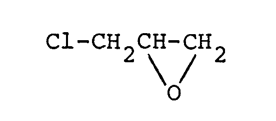
and treat the resulting polymer with aqueous ammonia. Thereby, there is obtained a monolayer polymer or multilayer polymer having the repeating unit represented by the formula:

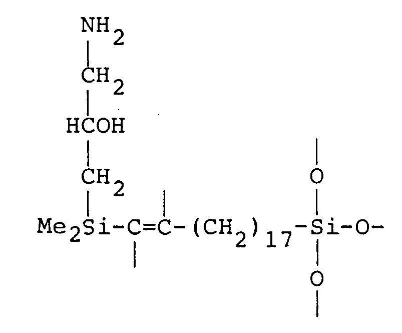

The etching conducted in the present invention is that conducted in the field of semiconductor. For example, the substrate on which a monolayer polymer or multilayer polymer is formed can be etched in a form of a lattice, using photolithography, from the back side on which no polymer is formed.

The present invention is explained more specifically below referring to Examples. However, the present invention should not be construed to be restricted to the Examples.

### EXAMPLE 1

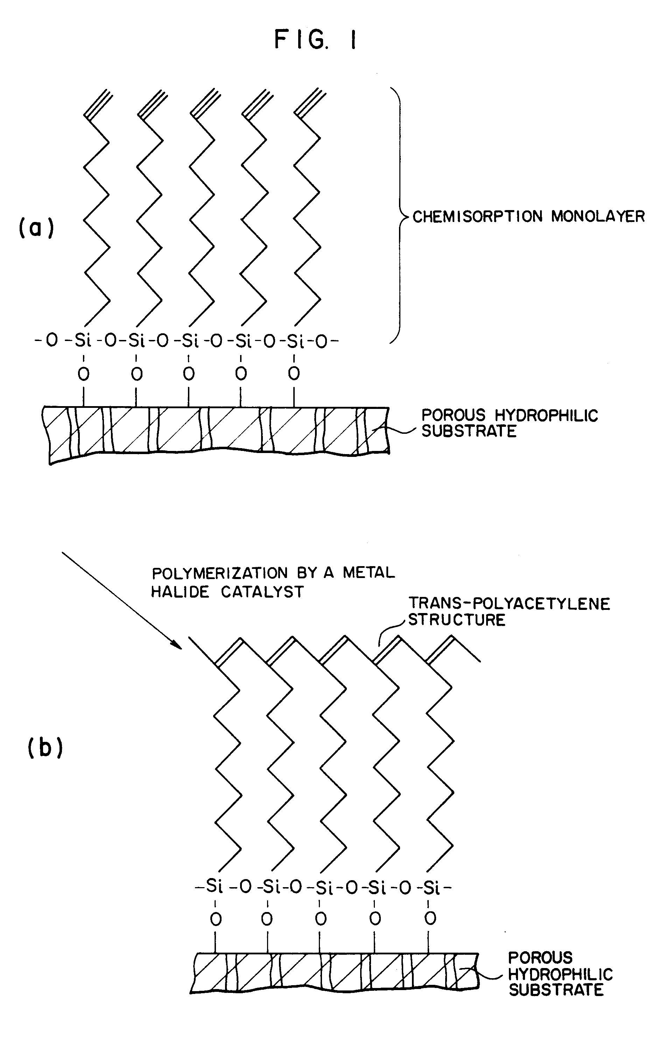

In the mixture of 80% by weight of n-hexane, 12% by weight of carbontetrachloride and 8% by weight of chloroform, there was dissolved 18-nonadecynyltrichlorosilane HC≡C-(CH₂)₁₇-SiCl₃ (hereinafter referred to as NTS) to obtain a solution of NTS having a concentration of 1.0 x 10⁻³ mol/L. The substrate of a cellulose filter was immersed in the solution of NTS at room temperature in an atmosphere of dry nitrogen to form the chemical bond of 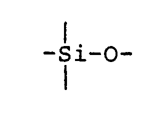
at the surface of the substrate (see Figure 1(a)). It was found from a FT-IR spectrum that a monolayer of 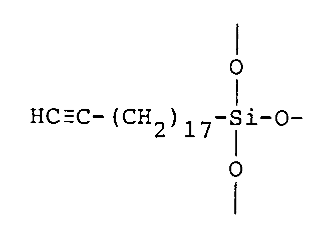
was formed at the surface of the substrate. As a result, there was obtained the monolayer of a surfactant compound formed on the substrate.

In the toluene solution of MoCl₅ as the catalyst, the substrate, on which a chemisorption monolayer of NTS was formed, was immersed and kept at 40°C for 40 minutes. It was clarified from a FT-IR spectrum that a polymer having a trans-polyacetylene structure was formed on the substrate as shown in Figure 1(b).

The resulting polyacetylene is little influenced by heat, pressure or ultra-violet light even in a gas containing oxygen, as compared with the polyacetylene or derivatives thereof prepared according to the conventional Ziegler-Natta catalyst method.

Also, the resulting polyacetylene was insoluble in alcohols.

### EXAMPLE 2

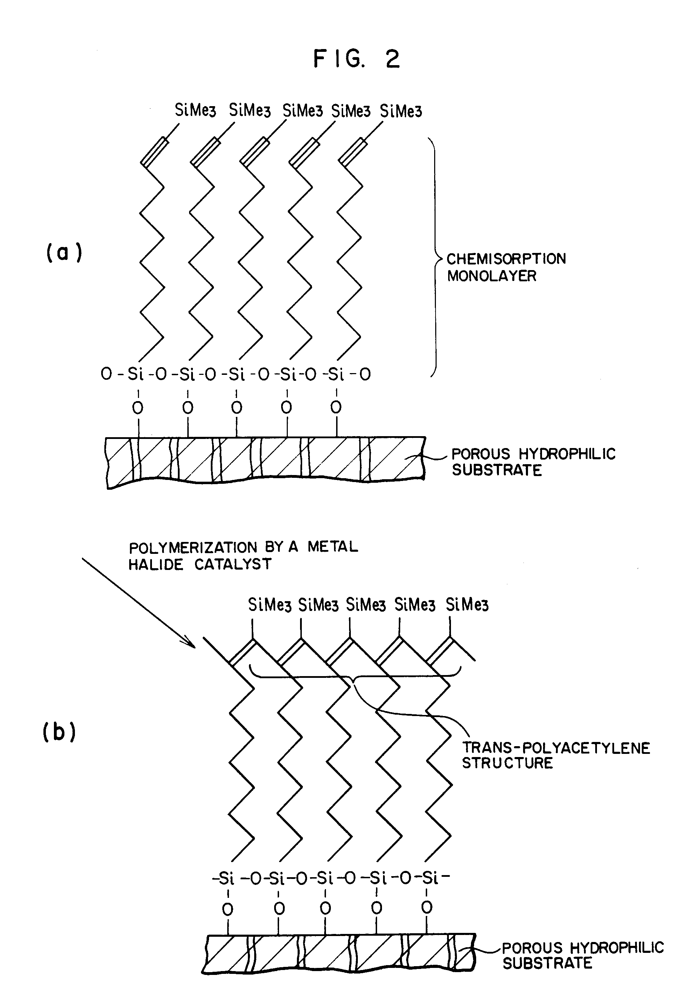

The same procedure was repeated as in Example 1, except that the cellulose filter was replaced by a glass filter and NTS was replaced by 19-trimethylsilyl-18-nonadecynyltrichlorosilane (hereinafter referred to as TMS-NTS) and the toluene solution of MoCl₅ was replaced by a toluene solution of WCl₆ and (C₄H₉)₄Sn in the ratio of 1:1. As a result, there was obtained a selectively permeable film comprising the monolayer of trans-polyacetylene containing -Si(CH₃)₃ shown in Figure 2(b).

The resulting polyacetylene is little influenced by heat, pressure or ultra-violet light even in a gas containing oxygen, as compared with the polyacetylene or derivatives thereof prepared according to the conventional Ziegler-Natta catalyst method.

Also, the resulting polyacetylene was insoluble in alcohols.

### EXAMPLE 3

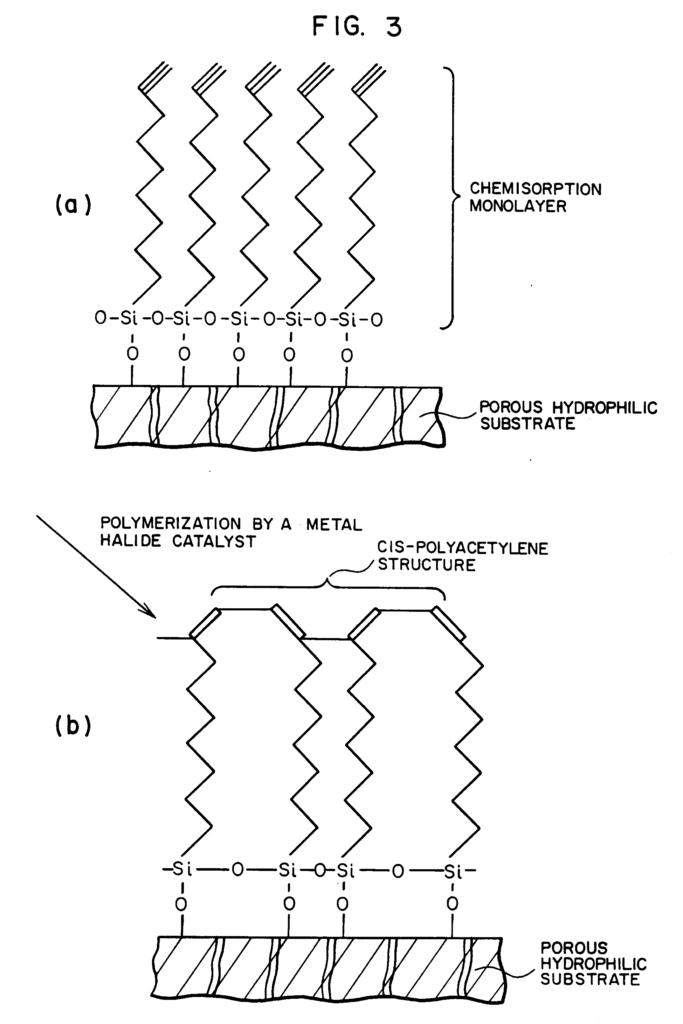

The same procedure was repeated as in Example 1, except that the toluene solution of MoCl₅ was replaced by an anisole solution of MoCl₆. As a result, there was obtained a selectively permeable film comprising the monolayer of cis-polyacetylene shown in Figure 3.

The resulting polyacetylene is little influenced by heat, pressure or ultra-violet light even in a gas containing oxygen, as compared with the polyacetylene or derivatives thereof prepared according to the conventional Ziegler-Natta catalyst method.

Also, the resulting polyacetylene was insoluble in alcohols.

### EXAMPLE 4

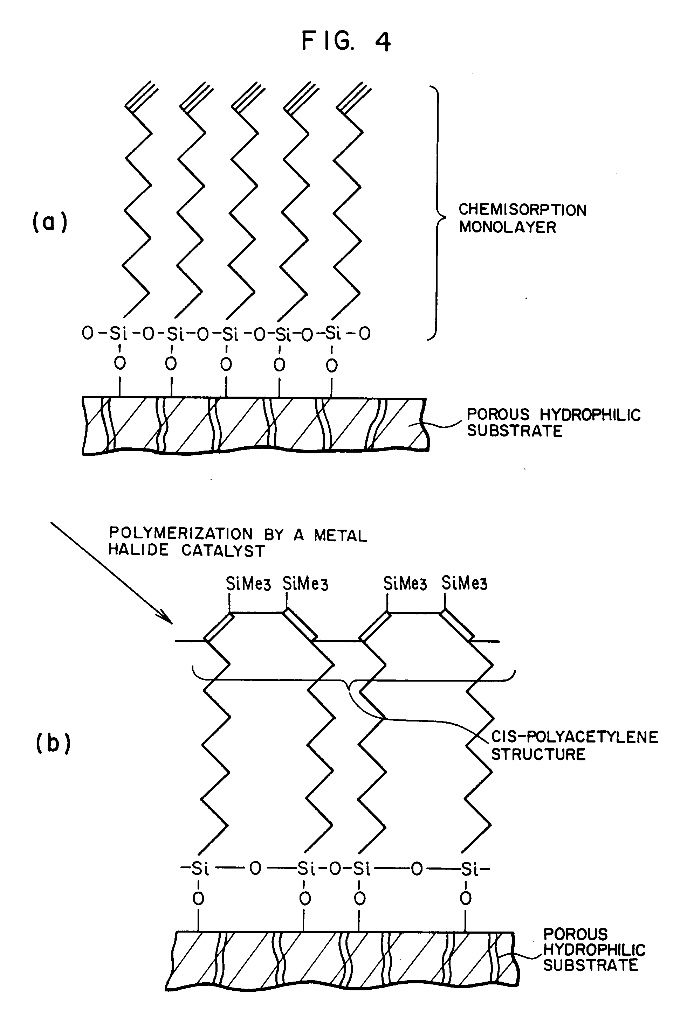

The same procedure was repeated as in Example 2, except that the toluene solution of WCl₆, and (C₄H₉)₄Sn in the ratio of 1:1 was replaced by an anisole solution of MoCl₆ and (C₆H₅)₃Bi in the ratio of 1:1. As a result, there was obtained a selectively permeable film conprising the monolayer of cis-polyacetylene containing -Si(CH₃)₃ shown in Figure 4.

The resulting polyacetylene is little influenced by heat, pressure or ultra-violet light even in a gas containing oxygen, as compared with the polyacetylene or derivatives thereof prepared according to the conventional Ziegler-Natta catalyst method.

Also, the resulting polyacetylene was insoluble in alcohols.

### EXAMPLE 5

The same procedure was repeated as in Example 1, except that polymerization by irradiation with electron beam (10 Mrad) was conducted instead of the polymerization using the solution of the catalyst. As a result, there was obtained a selectively permeable film comprising the monolayer of a mixture of cis- and trans-polyacetylene.

The resulting polyacetylene is little influenced by heat, pressure or ultra-violet light even in a gas containing oxygen, as compared with the polyacetylene or derivative thereof prepared according to the conventional Ziegler-Natta catalyst method.

Also, the resulting polyacetylene was insoluble in alcohols.

### EXAMPLE 6

The same procedure was repeated as in Example 5, except that NTS was replaced by 20,22-tricosadiynyltrichlorosilane HC≡C-C≡C-(CH₂)₁₉-SiCl₃ (hereinafter referred to as TCDTS). As a result, there was obtained a selectively permeable film comprising the monolayer of polydiacetylene.

The resulting polydiacetylene is little influenced by heat, pressure or ultra-violet light even in a gas containing oxygen.

Also, the resulting polyacetyelen was insoluble in alcohols.

### EXAMPLE 7

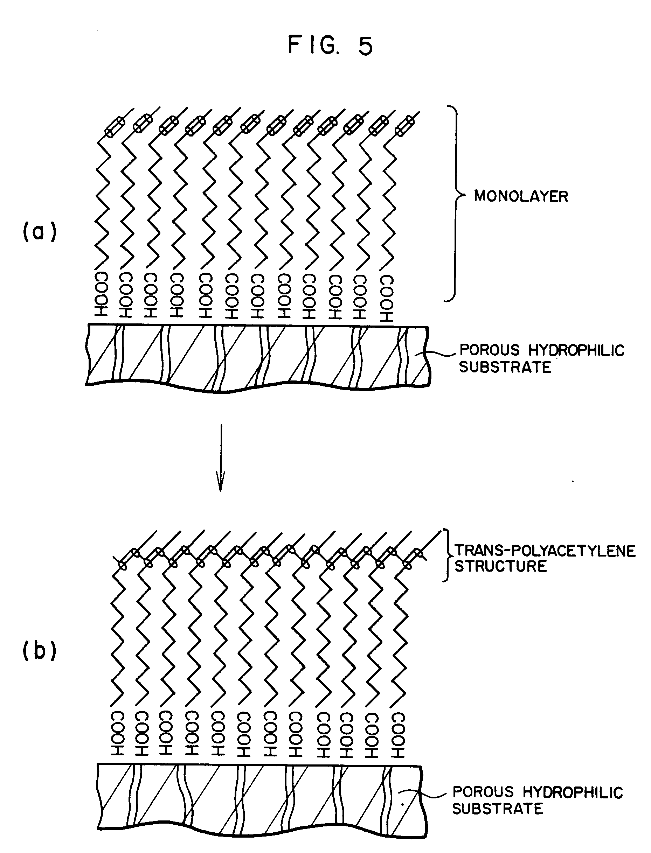

The LB monolayer of ω-tricosynoic acid HC≡C-(CH₂)₂₀-COOH (hereinafter referred to as TCA) was prepared using Joyce-Loebl Trough IV (made by Joyce-Loebl Co., Ltd.) in a clean room of class 100 where there was thrown a yellow light containing no light having a wavelength of 500 nm or less. A temperature and humidity was controlled at 23 ± 1°C and 40 ± 5%, respectively, in the clean room. The substrate used was a glass filter. In the obtained LB monolayer, the molecules of TCA was regularly oriented at the surface of the substrate as shown in Figure 5(a).

The substrate was immersed in a toluene solution of MoCl₅ at 40°C for 30 minutes. As a result, there was obtained a selectively permeable film comprising the monolayer of trans-polyacetylene as shown in Figure 5(b).

The resulting polyacetylene is little influenced by heat, pressure or ultra-violet light even in a gas containing oxygen as compared with the polyacetylene prepared according to the conventional Ziegler-Natta catalyst method.

Also, the resulting polyacetylene was insoluble in alcohols.

### EXAMPLE 8

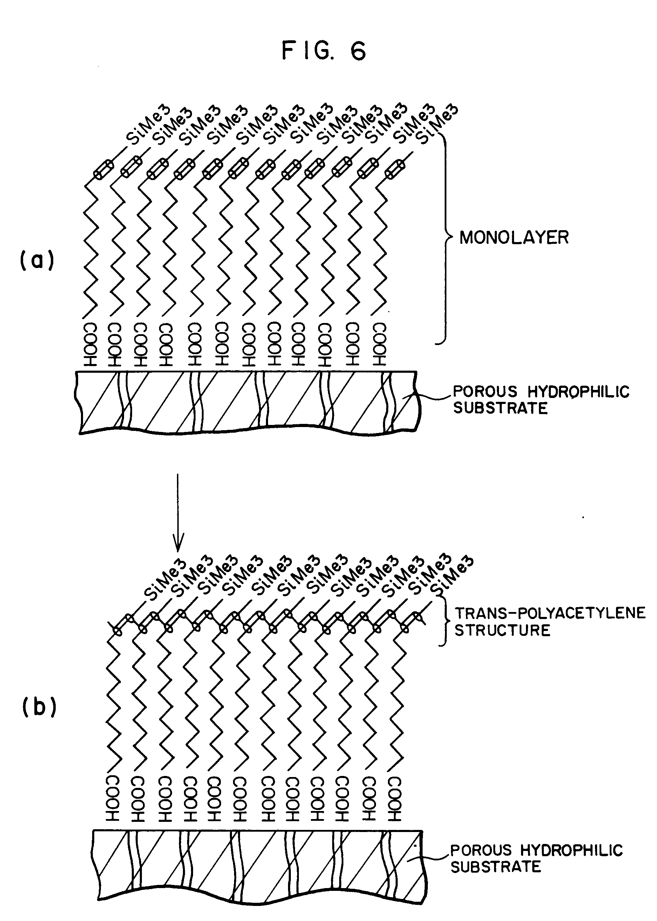

The same procedure was repeated as in Example 7, except that TCA was replaced by 23-trimethylsilyl-22-tricosynoic acid (CH₃)₃Si-C≡C-(CH₂)₂₀-COOH (hereinafter referred to as TMS-TCA) and the toluene solution of MoCl₅, was replaced by a toluene solution of WCl₆ and (C₄H₉)₄Sn in the ratio of 1:1. As a result, there was obtained a selectively permeable film comprising the monolayer of trans-polyacetylene as shown in Figure 6(b).

The resulting polyacetylene is little influenced by heat, pressure or ultra-violet light even in a gas containing oxygen as compared with the polyacetylene prepared according to the conventional Ziegler-Natta catalyst method.

Also, the resulting polyacetylene was insoluble in alcohols.

### EXAMPLE 9

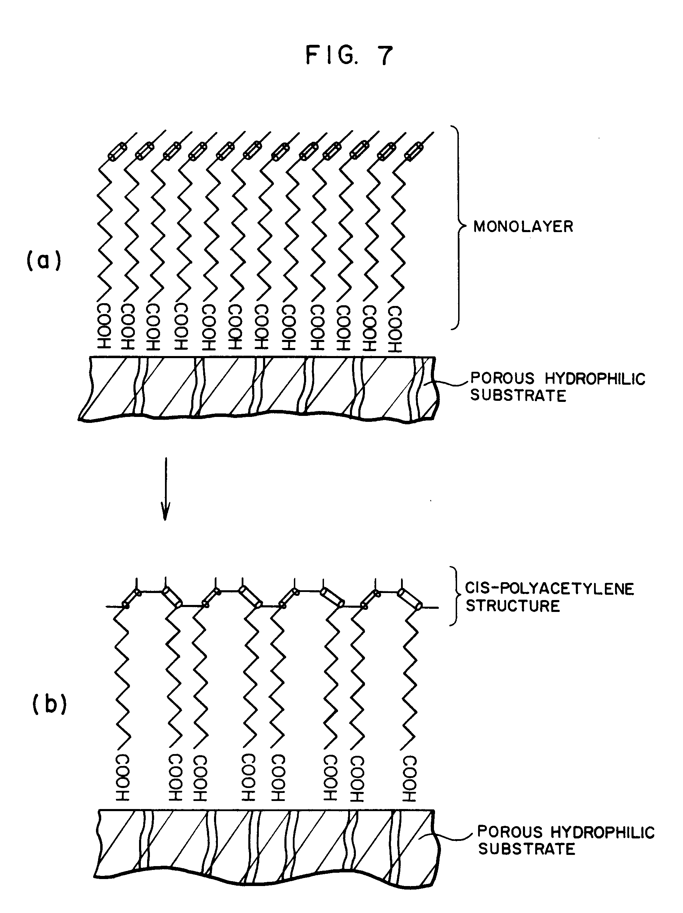

The same procedure was repeated as in Example 7, except that the toluene solution of MoCl₅ was replaced by an anisole solution of MoCl₆. As a result, there was obtained a selectively permeable film comprising the monolayer of cis-polyacetylene as shown in Figure 7(b).

The resulting polyacetylene is little influenced by heat, pressure or ultra-violet light even in a gas containing oxygen as compared with the polyacetylene prepared according to the conventional Ziegler-Natta catalyst method.

Also, the resulting polyacetylene was insoluble in alcohols.

### EXAMPLE 10

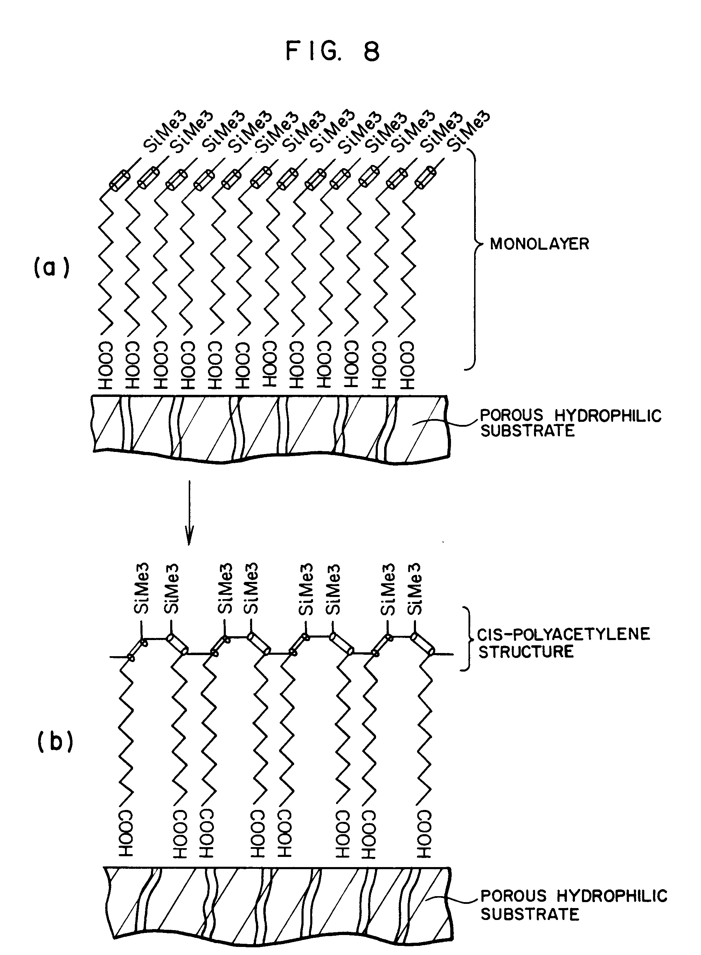

The same procedure was repeated as in Example 8, except that the toluene solutoin of WCl₆ and (C₄H₉)₄Sn in the ratio of 1:1 was replaced by an anisole solution of MoCl₆ and (C₆H₅)₃Bi in the ratio of 1:1. As a result, there was obtained a selectively permeable film comprising the monolayer of cis-polyacetylene containing -Si(CH₃)₃ as shown in Figure 8(b).

The resulting polyacetylene is little influenced by heat, pressure or ultra-violet light even in a gas containing oxygen as compared with the polyacetylene prepared according to the conventional Ziegler-Natta catalyst method.

Also, the resulting polyacetylene was insoluble in alcohols.

### EXAMPLE 11

An LB monolayer was prepared in the same manner as in Example 7, except that TCA was replaced by 22, 24-pentacosadiynoic acid HC≡C-C≡C-(CH₂)₂₀-COOH (hereinafter referred to as PCDA) and a d.c. voltage of 10 volts was applied horizontally at the surface of the water with two barriers as electrodes when gethering up the molecules of PCDA using a barrier at the surface of the water and building them up onto the substrate. In the obtained LB monolayer, the molecules of PCDA were more regularly oriented than in the film obtained without applying the d.c. voltage. PCDA was polymerized by irradiation with electron beam (10 Mrad). As a result, there was obtained a selective permeable film comprising polydiacetylene.

The resulting polydiacetylene is little influenced by heat, pressure or ultra-violet light even in a gas containing oxygen.

Also, the resulting polydiacetylene was insoluble in alcohols.

### EXAMPLE 12

In the mixture of 80% by weight of n-hexane, 12% by weight of carbontetrachloride and 8% by weight of chloroform, there was dissolved NTS to obtain a solution of NTS having a concentration of 1.0 x 10⁻³ mol/L. The substrate of a silicon wafer the surface of which was converted to SiO₂ was immersed in the solution of NTS at room temperature in an atmosphere of dry nitrogen to form the chemical bond of 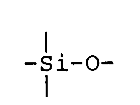
at the surface of the substrate (see Figure 9(a)). It was found from a FT-IR spectrum that a monolayer of 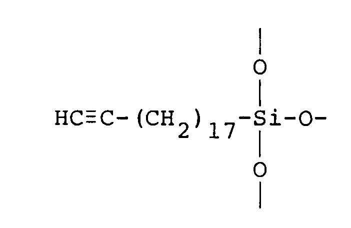
was formed at the surface of the substrate.

In the toluene solutoin of MoCl₅ as the catalyst, the substrate on which the chemisorption monolayer of NTS was formed was immersed and kept at 40°C for 40 minutes. As a result, the monolayer polymer of NTS was prepared. It was clarified from a FT-IR spectrum that a polymer having a trans-polyacetylene structure was formed on the substrate as shown in Figure 9(b).

Next, a part of the silicon wafer was removed by etching the silicon wafer in a form of a lattice, using photolithography, from the back side on which no monolayer of trans-polyacetylene was formed. Thereby, there was obtained a selectively permeable film comprising the monolayer polymer placed on a lattice-shaped substrate as shown in Figure 10(c). A repeating unit of the polymer of NTS is typically shown in Figure 10(a).

The resulting polyacetylene is little influenced by heat, pressure or ultra-violet light even in a gas containing oxygen, as compared with the polyacetylene or derivatives thereof prepared according to the conventional Ziegler-Natta catalyst method.

Also, the resulting polyacetylene was insoluble in alcohols.

### EXAMPLE 13

A monolayer polymer shown in Figure 11 was prepared in the same manner as in Example 12, except that NTS was replaced by TMS-NTS and the toluene solution of MoCl₅ was replaced by a toluene solutoin of WCl₆ and (C₄H₉)₄Sn in the ratio of 1:1. The resulting monolayer polymer formed on the substrate was subjected to the etching process in the same manner as in Example 12. As a result, there was obtained a selectively permeable film comprising the monolayer cf trans-polyacetylene containing -Si(CH₃)₃ placed on a lattice-shaped substrate.

The resulting polyacetylene is little influenced by heat, pressure or ultra-violet light even in a gas containing oxygen, as compared with the polyacetylene or derivatives thereof prepared according to the conventional Ziegler-Natta catalyst method.

Also, the resulting polyacetylene was insoluble in alcohols.

### EXAMPLE 14

The same procedure was repeated as in Example 12, except that the toluene solutoin of MoCl₅ was replaced by an anisole solution of MoCl₅. As a result, there was obtained a selectively permeable film comprising the monolayer of cis-polyacetylene placed on a lattice-shaped substrate.

The resulting polyacetylene is little influenced by heat, pressure or ultra-violet light even in a gas containing oxygen, as compared with the polyacetylene or derivatives thereof prepared according to the conventional Ziegler-Natta catalyst method.

Also, the resulting polyacetylene was insoluble in alcohols.

### EXAMPLE 15

The same procedure was repeated as in Example 13, except that the toluene solution of WCl₆ and (C₄H₉)₄Sn in the ratio of 1:1 was replaced by an anisole solution of MoCl₅ and (C₆H₅)₃Bi in the ratio of 1:1. As a result, there was obtained a selectively permeable film comprising the monolayer of cis-polyacetylene containing -Si(CH₃)₃ placed on a lattice-shaped substrate.

The resulting polyacetylene is little influenced by heat, pressure or ultra-violet light even in a gas containing oxygen, as compared with the polyacetylene or derivatives thereof prepared according to the conventional Ziegler-Natta catalyst method.

Also, the resulting polyacetylene was insoluble in alcohols.

### EXAMPLE 16

The monolayer of a surfactant compound was prepared in the same manner as in Example 12, except that NTS was replaced by TCDTS. The molecules of TCDTS were polymerized by irradiation with ultra-violet light (100 mJ/cm²) as shown in Figure 12. As a result, there was obtained a selectively permeable film comprising the monolayer of polydiacetylene.

The resulting polydiacetylene is little influenced by heat, pressure or ultra-violet light even in a gas containing oxygen.

Also, the resulting polydiacetylene was insoluble in alcohols.

### EXAMPLE 17

The same procedure was repeated as in Example 16, except that TCDTS was replaced by ω-nonadecenyltrichlorosilane H₂C=CH-(CH₂)₁₇-SiCl₃ and the ultra-violet light was replaced by electron beam (50 mJ/cm²). As a result, there was obtained a selectively permeable film comprising the monolayer of a polymer having a polyethylene structure.

The resulting polymer is little influenced by heat, pressure or ultra-violet light even in a gas containing oxygen.

Also, the resulting polymer was insoluble in alcohols.

### EXAMPLE 18

The monolayer polymer derived from 19-dimethylsilyl-18-nonadecynyltrichlorosilane (CH₃)₂HSi-C≡C-(CH₂)₁₇-SiCl₃ (hereinafter referred to as DMS-NTS) was prepared in the same manner as in Example 12, except that NTS was replaced by DMS-NTS and the toluene solution of MoCl₅ was replaced by a toluene solutoin of WCl₆ and (C₄H₉)₄Sn in the ratio of 1:1. The resulting monolayer polymer was treated at 30°C for 2 hours with a strong alkali (10%-KOH) as shown in Figure 13(a). Thereby, a hydroxyl group (-OH) was substituted for a hydrogen atom (H) of the terminal silane group of the repeating unit of the polymer represented by the formula:

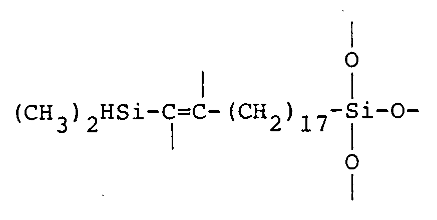

Thereafter, the same chemisorption process, polymerization process and treatment with an alkali was repeated 5 times to obtain the multilayer polymer derived from DMS-NTS as shown in Figure 13(b).

Further, a part of the silicon wafer was removed by etching the silicon wafer in a form of a lattice, using photolithography, from the back side on which no multilayer polymer was formed. Thereby, there was obtained a selectively permeable film comprising the multilayer polymer placed on a lattice-shaped substrate as shown in Figure 13(c).

The resulting polymer is little influenced by heat, pressure or ultra-violet light even in a gas containing oxygen.

Also, the resulting polymer was insoluble in alcohols.

### EXAMPLE 19

The LB monolayer of TCA was prepared using Joyce-Loebl Trough IV (made by Joyce-Loebl Co., Ltd.) in a clean room of class 100 where there was thrown a yellow light containing no light having a wavelength of 500 nm or less. A temperature and humidity was controlled at 23 ± 1°C and 40 ± 5%, respectively, in the clean room. The substrate was a silicon wafer the surface of which was converted to SiO₂. In the resulting LB monolayer, the molecules of TCA was regularly oriented at the surface of the substrate.

The molecules of TCA were polymerized in the monolayer by irradiation with electron beam (10 Mrad) in an atmosphere of dry nitrogen. Thereby, there was obtained a monolayer polymer derived from TCA.

Further, the silicon wafer was removed by etching the silicon wafer in a form of a lattice, using photolithography, from the back side on which no monolayer of trans-polyacetylene was formed. Thereby, there was obtained a selectively permeable film comprising the monolayer polymer placed on a lattice-shaped substrate.

The resulting polyacetylene is little influenced by heat, pressure or ultra-violet light even in a gas containing oxygen as compared with the polyacetylene prepared according to Ziegler-Natta catalyst method.

Also, the resulting polyacetylene was insoluble in alcohols.

### EXAMPLE 20

The same procedure was repeated as in Example 19, except that TCA was replaced by PCDA and the irradiation with electron beam (10 Mrad) was replaced by irradiation with ultra-violet light (100 mJ/cm²). As a result, there was obtained a selectively permeable film comprising the monolayer of polydiacetylene placed on a lattice-shaped substrate.

The resulting polydiacetylene is little influenced by heat, pressure or ultra-violet light even in a gas containing oxygen.

Also, the resulting polydiacetylene was insoluble in alcohols.

### EXAMPLE 21

The monolayer polymer derived from DMS-NTS was prepared in the same manner as in Example 12, except that NTS was replaced by DMS-NTS. The surface of the resulting monolayer polymer was treated with a plasma of oxygen (100 W, 5 minutes) to convert the terminal silane group (CH₃)₂HSi-C=C- into (CH₃)₂(OH)Si-C=C-. The resulting film was immersed in a hexane solution of butyllithium and thereby the molecules in the monolayer was reacted with 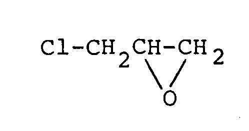
to substitute 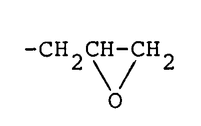
for the hydroxide group. Thereafter, the resulting film was treated with aqueous ammonia to obtain a monolayer polymer having the repeating unit represented by the formula:

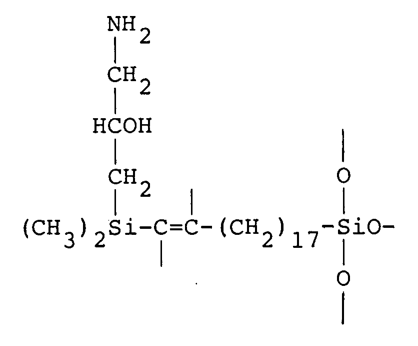

## Claims

1. A selectively permeable film comprising a porous hydrophilic substrate and the monolayer or multilayer of a polymer obtained by polymerizing a compound using a catalyst or using irradiation with an energy beam, said compound having a polymerizable group and having another functional group for adhesion to said substrate.

2. A selectively permeable film according to Claim 1, wherein the polymerizable group comprises one selected from the group consisting of -C=C-, -C≡C- and -C≡C-≡C-.

3. A selectively permeable film accroding to Claim 1, wherein the polymerizable group is -C≡C-Si(CH₃)₃.

4. A selectively permeable film according to any of Claims 1 to 3, wherein said other functional group comprises one selected from the group consisting of -COOH and -SiClx (x=1, 2 or 3).

5. A selectively permeable film according to any of Claims 1 to 4, wherein the porous hydrophilic substrate is one selected from the group consisting of a cellulose filter, a glass filter, a ceramic film, and a porous metal film.

6. A selectively permeable film according to any of Claims 1 to 5, wherein the compound is one selected from the group consisting of HC≡C-(CH₂)₁₇-SiCl₃ and (CH₃)₃Si-C≡C-(CH₂)₁₇-SiCl₃.

7. A selectively permeable film according to any of Claims 1 to 6, wherein an alcoholic hydroxide group or an ionic functional group is substituted for a part of the group existing at the surface of the monolayer polymer or multilayer polymer.

8. A selectively permeable film according to any of Claims 1 to 7, wherein the energy beam is one selected from the group consisting of ultra-violet light, electron beam, X-ray and γ-ray.

9. A process for producing a selectively permeable film which comprises forming a monolayer or multilayer of a compound having a polymerizable group and another functional group on the surface of a porous hydrophilic substrate and then polymerizing said compound by a catalyst or by irradiation with an energy beam, said other functional group serving for adhesion to said substrate.

10. A process for producing a selectively permeable film according to Claim 9, wherein the monolayer or multilayer is formed by chemisorption or according to LB process.

11. A process for producing a selectively permeable film according to Claims 9 or 10, wherein the polymerizable group comprises one selected from the group consisting of -C=C-, -C≡C- and -C≡C-C≡C-.

12. A process for producing a selectively permeable film according to any of Claims 9 to 11, wherein said other functional group comprises one selected from the group consisting of -COOH and -SiClx (x=1, 2 or 3).

13. A process for producing a selectively permeable film according to any of Claims 9 to 12, wherein the compound has both 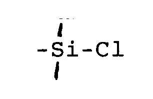 and -C≡C-Si(CH₃)₃.

14. A process for producing a selectively permeable film according to any of Claims 9 to 13, wherein the catalyst comprises a metal halide catalyst or metal carbonyl catalyst containing one selected from the group consisting of Mo, W, Nb and Ta.

15. A process for producing a selectively permeable film according to Claims 9 to 14, wherein the catalyst comprises a metal halide catalyst and an organotin compound or organobismuth compound which is a co-catalyst of the metal halide catalyst.

16. A process for producing a selectively permeable film according to any of Claims 9 to 15, wherein the compound is one selected from the group consisting of HC≡C-(CH₂)₁₇-SiCl₃ and (CH₃)Si-C≡C-(CH₂)₁₇-SiCl₃.

17. A process for producing a selectively permeable film according to any of Claims 9 to 16, wherein the polymerizable group comprises one selected from the group consisting of -C=C-, -C≡C- and -C≡C-C≡C- and said other functional group is -COOH.

18. A process for producing a selectively permeable film according to any of Claims 9 to 17, wherein the polymerizable group is -C≡C-Si(CH₃)₃ and said other functional group is -COOH.

19. A process for producing a selectively permeable film according to any of Claims 9 to 18, wherein the compound is one selected from the group consisting of HC≡C-(CH₂)₁₇-COOH and (CH₃)₃Si-C≡C-(CH₂)₁₇-COOH.

20. A process for producing a selectively permeable film according to any of Claims 9 to 19, wherein the energy beam is one selected from the group consisting of ultra-violet light, electron beam, X-ray and γ-ray.

21. A process for producing a selectively permeable film according to any of Claims 9 to 20, wherein a d.c. voltage is applied horizontally at the surface of the water when forming the monolayer or multilayer according to LB process.

22. A process according to any of Claims 9 to 21 characterized by removing a part of said substrate by etching said substrate from the back side on which the monolayer or multilayer is not formed.

23. A process according to any of Claims 9 to 22, wherein the surface of said monolayer or multilayer is modified by a chemical treatment or physical treatment, and a part of said substrate is removed by etching said substrate from the back side on which the monolayer or multilayer is not formed.

24. A process for producing a selectively permeable film according to Claim 23, wherein an alcoholic hydroxide group or an ionic functional group is substituted for a part of the group existing at the surface of the monolayer polymer or multilayer polymer in the process for modifying said surface.

## Patentansprüche

1. Selektiv permeabler Film mit einem porösen hydrophilen Substrat und der Einfachschicht oder der Mehrfachschicht eines durch Polymerisation einer Verbindung unter Verwendung eines Katalysators oder unter Verwendung von Bestrahlung mit einem Energiestrahl gewonnenen Polymers, wobei die Verbindung eine polymerisierbare Gruppe sowie eine andere funktionale Gruppe zum Anheften an dem Substrat aufweist.

2. Selektiv permeabler Film nach Anspruch 1, bei dem die polymerisierbare Gruppe ein ausgewähltes Element aus der Gruppe bestehend aus -C=C-, -C≡C- und -C≡C-≡C- enthält.

3. Selektiv permeabler Film nach Anspruch 1, bei dem die polymiersierbare Gruppe -C≡C-Si(CH₃)₃ ist.

4. Selektiv permeabler Film nach einem der Ansprüche 1 bis 3, bei dem die andere funktionale Gruppe ein ausgewähltes Element aus der Gruppe bestehend aus -COOH und -SiClx (x=1, 2 oder 3) enthält.

5. Selektiv permeabler Film nach einem der Ansprüche 1 bis 4, bei dem das poröse hydrophile Substrat ein ausgewähltes Element aus der Gruppe bestehend aus einem Zellulosefilter, einem Glasfilter, einem Keramikfilm und einem porösen Metallfilm ist.

6. Selektiv permeabler Film nach einem der Ansprüche 1 bis 5, bei dem die Verbindung ein ausgewähltes Element aus der Gruppe bestehend aus HC≡C-(CH₂)₁₇-SiCl₃ und (CH₃)₃Si-C≡C-(CH₂)₁₇-SiCl₃ ist.

7. Selektiv permeabler Film nach einem der Ansprüche 1 bis 6, bei dem eine alkoholische Hydroxidgruppe oder eine ionische funktionale Gruppe einen Teil der an der Oberfläche des Einlagen-Polymers oder Mehrlagen-Polymers existierenden Gruppe ersetzt.

8. Selektiv permeabler Film nach einem der Ansprüche 1 bis 7, bei dem der Energiestrahl ein ausgewähltes Element der Gruppe bestehend aus ultraviolettem Licht, Elektronenstrahl, Röntgenstrahl und γ-Strahl ist.

9. Verfahren zum Herstellen eines selektiv permeablen Films, das die Ausbildung einer Einfachschicht oder einer Mehrfachschicht einer Verbindung mit einer polymerisierbaren Gruppe und einer anderen funktionalen Gruppe auf der Oberfläche eines porösen hydrophilen Substrats und sodann das Polymerisieren der Verbindung mittels eines Katalysators oder durch Bestrahlung mit einem Energiestrahl beinhaltet, wobei die andere funktionale Gruppe zum Anheften an dem Substrat dient.

10. Verfahren zum Herstellen eines selektiv permeablen Films nach Anspruch 9, bei dem die Einfachschicht oder die Mehrfachschicht durch Chemisorption oder nach dem LB-Verfahren ausgebildet wird.

11. Verfahren zum Herstellen eines selektiv permeablen Films nach Anspruch 9 oder 10, bei dem die polymersierbare Gruppe ein ausgewähltes Element aus der Gruppe bestehend aus -C=C-, -C≡C- und -C≡C-C≡C- enthält.

12. Verfahren zum Herstellen eines selektiv permeablen Films nach einem der Ansprüche 9 bis 11, bei dem die andere funktionale Gruppe ein ausgewähltes Element der Gruppe bestehend aus -COOH und -SiClx (x=1, 2 oder 3) enthält.

13. Verfahren zum Herstellen eines selektiv permeablen Films nach einem der Ansprüche 9 bis 12, bei dem die Verbindung sowohl 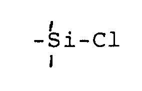 als auch -C≡C-Si(CH₃)₃ aufweist.

14. Verfahren zum Herstellen eines selektiv permeablen Films nach einem der Ansprüche 9 bis 13, bei dem der Katalysator einen Metallhalogenidkatalysator oder einen Metallcarbonylkatalysator aufweist, enthaltend ein ausgewähites Element aus der Gruppe bestehend aus Mo, W, Nb und Ta.

15. Verfahren zum Herstellen eines selektiv permeablen Films nach den Ansprüchen 9 bis 14, bei dem der Katalysator einen Metallhalogenidkatalysator und eine Organozinnverbindung oder eine Organowismuthverbindung enthält, die ein Co-Katalysator des Metallhalogenidkatalysators ist.

16. Verfahren zum Herstellen eines selektiv permeablen Films nach einem der Ansprüche 9 bis 15, bei dem die Verbindung ein ausgewähltes Element aus der Gruppe bestehend aus HC≡C-(CH₂)₁₇-SiCl₃ und (CH₃)Si-C≡C-(CH₂)₁₇-SiCl₃ ist.

17. Verfahren zum Herstellen eines selektiv permeablen Films nach einem der Ansprüche 9 bis 16, bei dem die polymerisierbare Gruppe ein ausgewähltes Element aus der Gruppe bestehend aus -C=C-, -C≡C- und -C≡C-C≡C- enthält und die andere funktionale Gruppe -COOH ist.

18. Verfahren zum Herstellen eines selektiv permeablen Films nach einem der Ansprüche 9 bis 17, bei dem die polymerisierbare Gruppe -C≡C-Si(CH₃)₃ ist und die andere funktionale Gruppe -COOH ist.

19. Verfahren zum Herstellen eines selektiv permeablen Films nach einem der Ansprüche 9 bis 18, bei dem die Verbindung ein ausgewähltes Element der Gruppe bestehend aus HC≡C-(CH₂)₁₇-COOH und (CH₃)₃Si-C≡C-(CH₂)₁₇-COOH ist.

20. Verfahren zum Herstellen eines selektiv permeablen Films nach einem der Ansprüche 9 bis 19, bei dem der Energiestrahl ein ausgewähltes Element aus der Gruppe bestehend aus ultraviolettem Licht, Elektronenstrahl, Röntgenstrahl und γ-Strahl ist.

21. Verfahren zum Herstellen eines selektiv permeablen Films nach einem der Ansprüche 9 bis 20, bei dem eine Gleichspannung horizontal an die Oberfläche des Wassers angelegt wird, wenn die Einfachschicht oder Mehrfachschicht nach dem LB-Verfahren hergestellt wird.

22. Verfahren nach einem der Ansprüche 9 bis 21, gekennzeichnet durch Entfernen eines Teils des Substrats durch Ätzen des Substrats von der Rückseite, auf der die Einfachschicht oder Mehrfachschicht nicht ausgebildet ist.

23. Verfahren nach einem der Ansprüche 9 bis 22, bei dem die Oberfläche der Einfachschicht oder der Mehrfachschicht durch eine chemische Behandlung oder eine physikalische Behandlung modifiziert wird und ein Teil des Substrats durch Ätzen des Substrats von der Rückseite entfernt wird, auf der die Einfachschicht oder Mehrfachschicht nicht ausgebildet ist.

24. Verfahren zum Herstellen eines selektiv permeablen Films nach Anspruch 23, bei dem eine alkoholische Hydroxidgruppe oder eine ionische funktionale Gruppe einen Teil der an der Oberfläche des Einfachschichtpolymers oder des Mehrfachschichtpolymers existierenden Gruppe bei dem Verfahren zum Modifizieren der Oberfläche ersetzt.

## Revendications

1. Film sélectivement perméable, comprenant un substrat hydrophile poreux et la monocouche ou la multicouche d'un polymère obtenu par polymérisation d'un composé à l'aide d'un catalyseur ou par irradiation avec un faisceau d'énergie, ledit composé renfermant un groupement polymérisable et comportant un autre groupement fonctionnel pour l'adhérence audit substrat.

2. Film sélectivement perméable selon la revendication 1, dans lequel le groupement polymérisable est un membre choisi dans le groupe constitué par -C=C-, -C≡C- et -C≡C-C≡C-.

3. Film sélectivement perméable selon la revendication 1, dans lequel le groupement polymérisable est -C=C-Si(CH₃)₃.

4. Film sélectivement perméable selon l'une quelconque des revendications 1 à 3, dans lequel ledit autre groupement fonctionnel est un membre choisi dans le groupe constitué par -COOH et -SiClₓ (x = 1, 2 ou 3).

5. Film sélectivement perméable selon l'une quelconque des revendications 1 à 4, dans lequel le substrat hydrophile poreux est un membre choisi dans le groupe constitué par un filtre de cellulose, un filtre de verre, un film de céramique et un film de métal poreux.

6. Film sélectivement perméable selon l'une quelconque des revendications 1 à 5, dans lequel le composé est un membre choisi dans le groupe constitué par HC≡C-(CH₂)₁₇-SiCl₃ et (CH₃)₃SiC-C≡C-(CH₂)₁₇-SiCl₃.

7. Film sélectivement perméable selon l'une quelconque des revendications 1 à 6, dans lequel un groupement hydroxyle alcoolique ou un groupement fonctionnel ionique est substitué à une partie du groupement existant à la surface du polymère monocouche ou du polymère multicouche.

8. Film sélectivement perméable selon l'une quelconque des revendications 1 à 7, dans lequel le faisceau d'énergie est choisi dans le groupe constitué par la lumière ultraviolette, les faisceaux électroniques, les rayons X et les rayons γ.

9. Procédé de fabrication d'un film sélectivement perméable, comprenant les opérations consistant à former une monocouche ou une multicouche d'un composé renfermant un groupement polymérisable et un autre groupement fonctionnel sur la surface d'un substrat hydrophile poreux, puis à polymériser ledit composé à l'aide d'un catalyseur ou par irradiation avec un faisceau d'énergie, ledit autre groupement fonctionnel servant à l'adhérence audit substrat.

10. Procédé de fabrication d'un film sélectivement perméable selon la revendication 9, dans lequel la monocouche ou la multicouche est formée par chimisorption ou par le procédé LB (Langmuir-Blodgett).

11. Procédé de fabrication d'un film sélectivement perméable selon la revendication 9 ou 10, dans lequel le groupement polymérisable est un membre choisi dans le groupe constitué par -C=C-, -C≡C- et -C≡C-C≡C-.

12. Procédé de fabrication d'un film sélectivement perméable selon l'une quelconque des revendications 9 à 11, dans lequel ledit autre groupement fonctionnel est un membre choisi dans le groupe constitué par -COOH et -SiClₓ (x = 1, 2 ou 3).

13. Procédé de fabrication d'un film sélectivement perméable selon l'une quelconque des revendications 9 à 12, dans lequel le composé renferme à la fois des groupements -Si-Cl et -C≡C-Si(CH₃)₃.

14. Procédé de fabrication d'un film sélectivement perméable selon l'une quelconque des revendications 9 à 13, dans lequel le catalyseur est un catalyseur à base d'halogénure métallique ou un catalyseur à base de métal-carbonyle, contenant un métal choisi dans le groupe constitué par Mo, W, Nb et Ta.

15. Procédé de fabrication d'un film sélectivement perméable selon l'une quelconque des revendications 9 à 14, dans lequel le catalyseur comprend un catalyseur à base d'halogénure métallique et un organoétain ou un organobismuth qui est un co-catalyseur du catalyseur à base d'halogénure métallique.

16. Procédé de fabrication d'un film sélectivement perméable selon l'une quelconque des revendications 9 à 15, dans lequel le composé est un membre choisi dans le groupe constitué par HC≡C-(CH₂)₁₇-SiCl₃ et (CH₃)₃Si-C≡C-(CH₂)₁₇-SiCl₃.

17. Procédé de fabrication d'un film sélectivement perméable selon l'une quelconque des revendications 9 à 16, dans lequel le groupement polymérisable est un membre choisi dans le groupe constitué par -C=C-, -C≡C- et -C≡C-C≡C-, et ledit autre groupement fonctionnel est -COOH.

18. Procédé de fabrication d'un film sélectivement perméable selon l'une quelconque des revendications 9 à 17, dans lequel le groupement polymérisable est -C≡C-Si(CH₃)₃, et ledit autre groupement fonctionnel est -COOH.

19. Procédé de fabrication d'un film sélectivement perméable selon l'une quelconque des revendications 9 à 18, dans lequel le composé est un membre choisi dans le groupe constitué par HC≡C-(CH₂)₁₇-COOH et (CH₃)₃Si-C≡C-(CH₂)₁₇-COOH.

20. Procédé de fabrication d'un film sélectivement perméable selon l'une quelconque des revendications 9 à 19, dans lequel le faisceau d'énergie est choisi dans le groupe constitué par la lumière ultraviolette, les faisceaux électroniques, les rayons X et les rayons γ.

21. Procédé de fabrication d'un film sélectivement perméable selon l'une quelconque des revendications 9 à 20, dans lequel une tension continue est appliquée horizontalement à la surface de l'eau lors de la formation de la monocouche ou de la multicouche suivant le procédé LB.

22. Procédé selon l'une quelconque des revendications 9 à 21, caractérisé par l'élimination d'une partie dudit substrat par attaque corrosive dudit substrat par la face arrière sur laquelle la monocouche ou la multicouche n'est pas formée.

23. Procédé selon l'une quelconque des revendications 9 à 22, dans lequel la surface de ladite monocouche ou multicouche est modifiée par un traitement chimique ou un traitement physique, et une partie dudit substrat est éliminée par attaque corrosive dudit substrat par la face arrière sur laquelle la monocouche ou la multicouche n'est pas formée.

24. Procédé de fabrication d'un film sélectivement perméable selon la revendication 23, dans lequel un groupement hydroxyle alcoolique ou un groupement fonctionnel ionique est substitué à une partie du groupement existant à la surface du polymère monocouche ou du polymère multicouche dans le traitement de modification de ladite surface.
